# EUROPÄISCHE PATENTSCHRIFT

(11) **EP 1 742 990 B1**
(45) Veröffentlichungstag und Bekanntmachung des Hinweises auf die Patenterteilung: **17.10.2007**
(21) Anmeldenummer: 05715897.4
(22) Anmeldetag: 10.03.2005
(51) Int. Cl.: C08J 3/22, C08G 63/08, C08G 63/20, C08L 67/04

(54) **DISPERGIERMITTEL FÜR PIGMENTKONZENTRATE, SEINE VERWENDUNG UND DAS DISPERGIERMITTEL ENTHALTENDE MASTERBATCHES**
DISPERSING AGENT FOR PIGMENT CONCENTRATES, USE THEREOF AND MASTER BATCHES CONTAINING THE DISPERSING AGENT
DISPERSANT DESTINE A DES CONCENTRES DE PIGMENTS, SON UTILISATION ET MELANGES MAITRES CONTENANT CE DISPERSANT

(30) Priorität: 31.03.2004 DE 102004016479
(43) Veröffentlichungstag der Anmeldung: 17.01.2007
(73) Patentinhaber: Byk-Chemie GmbH, 46483 Wesel (DE)
(72) Erfinder: HAUBENNESTEL, Karlheinz, 46487 Wesel (DE); BUBAT, Alfred, 46487 Wesel (DE); KRAPPE, Udo, 46446 Emmerich (DE); GERTZEN, Baerbel, 46446 Emmerich (DE); GARLINSKY, Joerg, 46485 Wesel (DE); PRITSCHINS, Wolfgang, 46487 Wesel (DE)
(74) Vertreter: Leifert, Elmar
(86) Internationale Anmeldenummer: PCT/EP2005/002515
(87) Internationale Veröffentlichungsnummer: WO 2005/097872

(56) Entgegenhaltungen:
- EP-A- 0 328 206
- WO-A-02/085507
- US-A- 3 748 308
- PATENT ABSTRACTS OF JAPAN Bd. 009, Nr. 301 (C-316), 28. November 1985 (1985-11-28) & JP 60 137967 A (NIPPON PAINT KK), 22. Juli 1985 (1985-07-22)

## Beschreibung

Die vorliegende Erfindung betrifft ein Dispergiermittel für Pigmentkonzentrate für die Einfärbung von thermoplastischen Kunststoffen. Sie betrifft auch die Verwendung des Dispergiermittels und Masterbatches, die das Dispergiermittel enthalten.

Durch die Zugabe von Dispergiermitteln, die auch als Netzmittel bezeichnet werden, lassen sich Pigmente, Füllstoffe und andere feinteilige Feststoffe leichter in Beschichtungsmassen und Kunststoffmassen einarbeiten. Die Dispergierarbeit wird reduziert, und die Homogenität und die Lagerstabilität der Endprodukte werden verbessert. Weiterhin erhöht sich aufgrund der feinen Verteilung die Farbstärke von Pigmenten, und damit steigt ihre Ergiebigkeit.

Bei der Einfärbung von Kunststoffen, insbesondere thermoplastischen Kunststoffen, können eine Reihe von Problemen auftreten, die auf die mangelhafte Einarbeitung der als Farbgeber verwendeten Pigmente zurückzuführen sind. So zeigen z. B. mit transparenten Pigmenten oder mit Glanzpigmenten eingefärbte Kunststoffe oftmals nicht das gewünschte Erscheinungsbild.

Kunststoffeinfärbungen mit Pigmenten sind dann transparent, wenn die üblicherweise < 15 nm großen Pigmentteilchen in feiner Verteilung vorliegen. Diese kleinen Primärpigmentteilchen neigen jedoch stark zur Agglomeration. Bei der Herstellung von Lacken werden solche Agglomerate unter großem Aufwand in speziellen Mühlen zerkleinert. Bei der Einarbeitung in Kunststoffe gelingt es in der Regel jedoch selbst bei Anwendung gleichläufiger Zweischneckenextruder nicht, transparente Einfärbungen mit dispergierharten Pigmenten, wie transparenten Eisenoxidpigmenten, Rußpigmenten und Perylenpigmenten, stippenfrei zu erzeugen, ohne den Kunststoff unverhältnismäßig zu schädigen.

Bei den auf plättchenförmigen Pigmentteilchen basierenden Glanzpigmenten ist bei der Einarbeitung in den Kunststoff oftmals eine Veränderung von Pigmentteilchengröße und -form zu beobachten. Die erhaltenen Einfärbungen sind dann koloristisch weniger attraktiv als mit diesen Pigmenten erzeugte Lackierungen und lassen Brillanz und den typischen seidigen Glanz aus der Tiefe vermissen.

Es ist bekannt, bei der Einfärbung von thermoplastischen Kunststoffen Wachse als Dispergiermittel einzusetzen. Diese Wachse benetzten jedoch die Pigmente nur, sie stabilisieren sie jedoch nicht. Im Endprodukt kommt es außerdem häufig zu Migrationsproblemen.

Aus der DE 100 57 164 A1 sind als Dispergiermittel für thermoplastische Kunststoffe polymere Verbindungen bekannt, die durch Umsetzung von (Co)Polymeren von C₁ bis C₂₅ Alkylestern α,β-ungesättigter Carbonsäuren, die eine terminale Hydroxylgruppe aufweisen, mit mehrwertigen Isocyanaten und weitere Umsetzung der erhaltenen Produkte mit Ammoniak oder polyfunktionellen Aminen erhältlich sind.

Es ist Aufgabe der vorliegenden Erfindung, Dispergiermittel anzugeben, die bei der Pigmentierung von thermoplastischen Kunststoffen verbesserte Eigenschaften ergeben. Insbesondere soll eine verbesserte Farbstärke erzielt werden, die Bildung von Pigmentagglomeraten soll reduziert werden, weil diese zu Pigmentstippen, d. h. einer ungleichmäßigen Einfärbung des Kunststoffs, führen. Die Migration der Pigmente im Endprodukt soll verhindert werden und schließlich sollen die Dispergiermittel bei Raumtemperatur fest sein, um ihre Dosierung und ihre Einarbeitung in die Kunststoffe zu erleichtern. Unter Raumtemperatur wird eine Temperatur von 25 °C verstanden.

Überraschenderweise wurde gefunden, dass die genannten Aufgaben durch spezifische, Carboxylgruppen enthaltende Polyester als Dispergiermittel gelöst werden können.

Gegenstand der vorliegenden Erfindung ist daher ein Dispergiermittel, der eingangs genannten Art, welches die allgemeine Formel 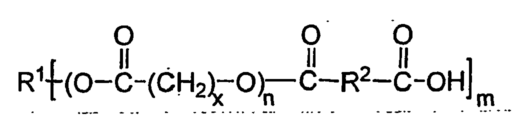 aufweist, in der R¹ den organischen Rest eines Alkohols mit 1 bis 3 OH-Gruppen oder den Rest eines Polysiloxans darstellt, das 1 bis 3 nicht an ein Silicium-Atom gebundene Hydroxylgruppen aufweist, R² einen zweiwertigen, geradkettigen oder verzweigten aliphatischen oder cycloaliphatischen Rest darstellt, x = 2 bis 18, n = 10 bis 500 und m = 1 bis 3 ist, wobei das Dispergiermittel ein Molekulargewicht von 1000 bis 20000 g/mol und eine Säurezahl von 3 bis 180 mgKOH/g aufweist und bei Raumtemperatur fest ist.

Aus dem US-Patent US-A-3 748 308 sind Carboxylgruppen enthaltende Polyester bekannt, die als Dispergierhilfsmittel für die Dispergierung von festen Teilchen in organischen Flüssigkeiten verwendet werden. Strukturell unterscheiden sich die bekannten Verbindungen von den Dispergiermitteln der vorliegenden Erfindung dadurch, dass sie zwingend Reste von aromatischen Carbonsäuren als Träger der Carboxylgruppen enthalten. Die Verwendung der bekannten Dispergiermittel für die Dispergierung von Pigmenten oder dergleichen in thermoplastischen Kunststoffmassen wird nicht beschrieben.

Beispiele für thermoplastische Kunststoffe sind die Polyolefine, wie z. B. Polyethylen und Polypropylen, Acrylharze, Styrolpolymere, Polycarbonate, Polyamide, Polyester, thermoplastischen Polyurethane, Potyethersulfone, Polysulfone, Vinylpolymere oder deren Mischungen, wobei die Acrylharze, die Styrolpolymere und die thermoplastischen Polyurethane besonders geeignet sind.

Als geeignete Acrylharze seien die Polyalkyl- und/oder -acrylester der (Meth)Acrylsäure, Poly(meth)acrylamide und Poly(meth)acrylnitril genannt. Bevorzugte Acrylharze sind Polyalkylmethacrylate, auch in schlagzäh modifizierter Form, wobei Polymethylmethacrylat (PMMA) und schlagzähmodifiziertes Polymethylmethacrylat (HI(High Impact)-PMMA) besonders bevorzugt sind. Vorzugsweise enthält das PMMA einen Anteil von in der Regel nicht mehr als 20 Gew.-% an (Meth)Acrylatcomonomeren wie n-Butyl(meth)acrylat oder Methylacrylat. HI-PMMA ist durch geeignete Zusätze schlagzäh ausgerüstet. Als Schlagzähmodifizierer kommen z. B. EPDM-Kautschuke, Polybutylacrylate, Polybutadien; Polysiloxane oder Methacrylat/Butadien/Styrol(MBS) und Methacrylat/Acrylnitril/Butadien/Styrol-Copolymerisate in Frage. Geeignete schlagzähmodifizierte PMMA sind beispielsweise beschrieben von M. Stickler, T. Rhein in Ullmann's encyclopedia of industrial chemistry Vol. A21, Seiten 473-486, VCH Publishers Weinheim, 1992, und H. Domininghaus, Die Kunststoffe und ihre Eigenschaften, VDI-Verlag Düsseldorf, 1992. Geeignete Polymethylmethacrylate sind dem Fachmann im Übrigen bekannt und z. B. unter den Handelsmarken Lucryl® (BASF AG) und Plexiglas® (Röhm GmbH) erhältlich.

Als Styrolpolymere kommen alle (Co)Polymeren in Frage, die vollständig oder in Teilen aus vinylaromatischen Verbindungen aufgebaut sind. Geeignete vinylaromatische Verbindungen sind z. B. Styrol und Styrolderivate wie ein- oder mehrfach alkyl- und/oder halogensubstituiertes Styrol sowie entsprechende Naphthylverbindungen. Bevorzugt wird auf Styrolcopolymerisate zurückgegriffen.

Hierzu zählen beispielsweise Pfropfcopolymerisate von Acrylnitril und Styrol auf Butadienkautschuke, auch als ABS-Polymerisate bekannt (z. B. das Handelsprodukt Terluran® der BASF AG), Pfropfcopolymerisate von Styrol und Acrylnitril auf Polyalkylacrylatkautschuke, auch als ASA-Polymerisate bekannt (z. B. das Handelsprodukt Luran® S der BASF AG), oder Styrol-Acrylnitril-Copolymerisate, auch SAN-Copolymerisate genannt (z. B. das Handelsprodukt Luran® der BASF AG). Als Polymer besonders bevorzugte Styrolpolymere sind ASA-Polymerisate.

Geeignete Polycarbonate sind an sich bekannt. Unter Polycarbonate im Sinne der Erfindung fallen auch Copolycarbonate. Die (Co)Polycarbonate haben vorzugsweise ein Molekulargewicht (Gewichtsmittelwert M_{w}, bestimmt mittels Gelpermeationschromatographie in Tetrahydrofuran gegen Polystyrolstandards) im Bereich von 10000 bis 200000 g/mol. Bevorzugt liegt M_{w} im Bereich von 15000 bis 100000 g/mol. Dies entspricht relativen Lösungsviskositäten im Bereich von 1,1 bis 1,5, gemessen in 0,5 gew.%iger Lösung in Dichlormethan bei 25 °C, bevorzugt von 1,15 bis 1,33.

Polycarbonate sind z. B. entsprechend den Verfahren der DE-C-13 00 266 durch Grenzflächenpolykondensation oder gemäß dem Verfahren der DE-A-14 95 730 durch Umsetzung von Diphenylcarbonat mit Bisphenolen erhältlich. Bevorzugtes Bisphenol ist 2,2-Di(4-hydroxyphenyl)propan, üblicherweise als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydipheriylmethan, 1,1-Di-(4-hydroxyphenyl)ethan, 4,4-Dihydroxydiphenyl oder Dihydroxydiphenylcycloalkane, bevorzugt Dihydroxyphenylcyclohexane oder Dihydroxycyclopentane, insbesondere 1,1-Bis(4-hydroxyphenyl)-3,3,5-trimethylcyclohexan, sowie Mischungen der vorgenannten Dihydroxyverbindungen.

Besonders bevorzugte Polycarbonate sind solche auf der Basis von Bisphenol A oder Bisphenol A zusammen mit bis zu 80 mol-% der vorstehend genannten aromatischen Dihydroxyverbindungen.

Es könne auch Copolycarbonate gemäß der US-A-37 37 409 verwendet werden. Von besonderem Interesse sind Copolycarbonate auf der Basis von Bisphenol A und Bis-(3,5-dimethyl-4-hydroxyphenyl)sulfon und/oder 1,1-Bis(4-hydroxyphenyl)-3,3,5-trimethylcyclohexyl, die sich durch die hohe Wärmeformbeständigkeit auszeichnen.

Kommerziell erhältlich sind z. B. die Polycarbonate Makrolon® (Bayer) und Lexan® (GE Plastics).

Geeignete Polyamide (PA) können Polykondensationsprodukte von Diaminen und Dicarbonsäure, z. B. Adipinsäure und Hexamethylendiamin, oder von Aminosäuren, z. B. Aminoundecansäure, sein oder durch ringöffnende Polymersiation von Lactamen, z. B. Caprolactam oder Laurinlactam, hergestellt werden. Beispielhaft seien Ultramid® (BASF AG), Zytel® und Minlon® (DuPont), Sniamid®, Technyl® und Amodel® (Nyltech), Durethan® (Bayer) Akulon® und Stanyl® (DSM), Grilon®, Grilamid® und Grivory® (EMS), Orgamid® und Rilsan® (Atochem) und Nivionplast® (Enichem) genannt.

Als Polyamide können auch Mischungen aus Polyamiden und Polyethylenionomeren, z. B. Ethen/Methacrylsäure-Copolymere, enthaltend beispielsweise Natrium-, Zink und/oder Lithiumgegenionen (u. a. unter Handelsmarke Surlyn® (DuPont)) eingesetzt werden.

Als Polyester sind die höher- bis hochmolekularen Veresterungsprodukte von zweiwertigen Säuren, insbesondere Terephthalsäure, mit zweiwertigen Alkoholen, vor allem Ethylenglykol, geeignet. Unter den Polyalkylenterephthalaten ist Polyethylenterephthalat (PET; Arnite® (Akzo), Grilpet® (EMS-Chemie), Valox® (GEP)) besonders geeignet.

Thermoplastische Polyurethane (TPU) sind schließlich die Umsetzungsprodukte von Diisocyanaten und langkettigen Diolen. Gegenüber den aus Polyisocyanaten (enthaltend mindestens drei Isocyanatgruppen) und mehrwertigen Alkoholen (enthaltend mindestens drei Hydroxygruppen), insbesondere Polyether- und Polyesterpolyolen, Polyurethan-Schäumen weisen thermoplastische Polyurethane keine oder nur eine geringfügige Vernetzung auf und verfügen demgemäß über eine lineare Struktur. Thermoplastische Polyurethane sind dem Fachmann hinlänglich bekannt und finden sich z. B. im Kunststoff-Handbuch, Band 7, Polyurethane, Hrsg. G. Oertel, 2. Aufl., Carl Hanser Verlag, München, 1983, insbesondere auf den Seiten 428, 473, beschrieben. Als im Handel erhältliches Produkt sei hier z. B. Elastolan® (Elastogran) genannt.

Die Polymerklassen der Polyethersulfone und Polysulfone sind dem Fachmann ebenfalls bekannt und unter den Handelsnamen Ultrason® E und Ultrason® S kommerziell erhältlich.

Als geeignetes Vinylpolymer sei schließlich beispielsweise Polyvinylchlorid (PVC) genannt. Auch Mischpolymerisate des Vinylchlorids, welche durch die bekannten Verfahren hergestellt werden können (z. B. Suspensions-, Masse- oder Emulsionspolymerisation), Mischpolymere des Vinylchlorids mit bis zu 30 Gew.% an Comonomeren wie z. B. Vinylacetat, Vinylidenchlorid, Vinylether, Acrylnitril, Acrylsäureester, Maleinsäuremono- oder Diester oder Olifine, sowie Pfropfpolymerisate des Polyvinylchlorids und Polyacrylnitril sind geeignete thermoplastische Kunststoffe. Bevorzugte thermoplastische Kunststoffe sind Polyolefine, besonders bevorzugt werden Polyethylen und Polypropylen, z. B. HDPE, LDPE, LLDPE und VLDPE. Die thermoplastischen Kunststoffe können durch Spritzguß, Extrusion, Blasformen, Folienblasen, Faserspinnen, Rotationsguß oder Kalandrieren verarbeitet werden.

Unter Verwendung der erfindungsgemäßen Dispergiermittel kann eine Vielzahl von organischen oder anorganischen Pigmenten in thermoplastischen Kunststoffen dispergiert werden. Bei den organischen Pigmenten kann es sich dabei um Bunt-, Weiß- und Schwarzpigmente (Farbpigmente) und Flüssigkristallpigmente handeln. Anorganische Pigmente können ebenfalls Farbpigmente sowie Glanzpigmente und die üblicherweise als Füllstoffe eingesetzten anorganischen Pigmente sein.

Im folgenden seien als Beispiele für geeignete organische Farbpigmente genannt:
- Monoazopigmente:
   C.I. Pigment Brown 25;
   C.I. Pigment Orange 5, 36 und 67;
   C.I. Pigment Red 3, 48 : 2, 48 : 3, 48 : 4, 52 : 2, 63, 112 und 170;
   C.I. Pigment Yellow 3, 74, 151 und 183;
- Disazopigmente:
   C.I. Pigment Red 144, 166, 214 und 242;
   C.I. Pigment Yellow 83;
- Anthrachinonpigmente:
   C.I. Pigment Yellow 147 und 177;
   C.I. Pigment Violet 31;
- Benzimidazolpigmente:
   C.I. Pigment Orange 64;
- Chinacridonpigmente:
   C.I. Pigment Orange 48 und 49;
   C.I. Pigment Red 122, 202 und 206;
   C.I. Pigment Violet 19;
- Chinophthalonpigmente:
   C.I. Pigment Yellow 138;
- Diketopyrrolopyrrolpigmente:
   C.I. Pigment Orange 71 und 73;
   C.I. Pigment Red 254, 255, 264 und 270;
- Dioxazinpigmente:
   C.I. Pigment Violet 23 und 37;
- Indanthronpigmente:
   C.I. Pigment Blue 60;
- Isoindolinpigmente:
   C.I. Pigment Yellow 139 und 185;
- Isoindolinonpigmente
   C.I. Pigment Orange 61;
   C.I. Pigment Yellow 109 und 110;
- Metallkomplexpigmente:
   C.I. Pigment Yellow 153;
- Perinonpigmente:
   C.I. Pigment Orange 43;
- Perylenpigmente:
   C.I. Pigment Black 32;
   C.I. Pigment Red 149, 178 und 179;
   C.I. Pigment Violet 29;
- Phthalocyaninpigmente:
   C.I. Pigment Blue 15, 15 : 1, 15 : 2, 15 : 3, 15 : 4, 15 : 6 und 16;
   C.I. Pigment Green 7 und 36;
- C.I. Pigment Black 1 (Anilinschwarz)

Geeignete anorganische Farbpigmente sind z. B.:
- Weißpigmente:
   Titandioxid (C.I. Pigment White 6),Zinkweiß, Farbenzinkoxid; Zinksulfid, Lithopone;
- Schwarzpigmente:
   Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente:
   Chromoxid, Chromoxidhydratgrün; Chromgrün (C.I. Pigment Green 48); Cobaltgrün (C.I. Pigment Green 50); Ultramaringrün;
   Kobaltblau (C.I. Pigment Blue 28 und 36); Ultramarinblau, Manganblau;
   Ultramarinviolett; Kobalt- und Manganviolett;
   Eisenoxidrot (C.I. Pigment Red 101); Cadmiumsulfoselenid (C.I. Pigment Red 108); Molybdatrot (C.I. Pigment Red 104); Ultramarinrot;
   Eisenoxidbraun, Mischbraun, Spinell- und Korundphasen (C.I. Pigment Brown 24, 29 und 31), Chromorange;
   Eisenoxidgelb (C.I. Pigment Yellow 42).; Nickeltitangelb (C.I. Pigment Yellow 53; C.I. Pigment Yellow 157 und 164); Chromtitangelb; Cadmiumsulfid und
   Cadmiumzinksulfid (C.I. Pigment Yellow 37 und 35); Chromgelb (C.I. Pigment Yellow 34); Bismutvanadat (C.I. Pigment Yellow 184).

Als Beispiele für üblicherweise als Füllstoffe eingesetzte anorganische Pigmente seien transparentes Siliciumdioxid, Quarzmehl, Aluminiumoxid, Aluminiumhydroxid, natürliche Glimmer, natürliche und gefällte Kreide und Bariumsulfat genannt.

Neben den organischen Flüssigkristallpigmenten bilden die Glanz- und Effektpigmente eine besonders interessante Klasse geeigneter Pigmente.

Die optische Wirkung der Glanzpigmente beruht auf der gerichteten Reflexion von Licht an den überwiegend flächig ausgebildeten, zueinander parallel ausgerichteten, metallischen oder stark lichtbrechenden Pigmentteilchen. Je nach Zusammensetzung der Pigmentplättchen erzeugen Interferenz- und Reflexions- und Absorptionsphänomene winkelabhängige Farb- und Helligkeitseindrücke.

Die Glanzpigmente können sowohl einphasig als auch mehrphasig aufgebaut sein.

Als einphasige Glanzpigmente sind plättchenförmige Metallpigmente wie die im Handel erhältlichen Aluminiumplättchen von besonderem Interesse.

Die mehrphasig aufgebauten. Glanzpigmente können auf plättchenförmigen Substratteilchen basieren; die ein- oder mehrfach beschichtet werden, oder auf ebenfalls schichtartig aufgebauten Teilchen, die durch aufeinanderfolgendes filmartiges Aufbringen der gewünschten Schichtmaterialien auf eine Trägerfolie, anschließendes Entfernen der Trägerfolie von dem mehrschichtigen Film und dessen Zerkleinerung auf Pigmentteilchengröße hergestellt werden.

Bei der erstgenannten Variante stellen die bereits genannten plättchenförmigen Metallpigmente, insbesondere die Aluminiumplättchen, und oxidische Plättchen wie Plättchen aus vorzugsweise mit Aluminium und Mangan dotiertem Eisen(III)oxid und Glimmerplättchen bevorzugte Substratmaterialien dar. Bei der zweitgenannten Variante werden als Materialien für die zentrale Schicht bevorzugt Metalle wie Aluminium und Oxide wie Siliciumdioxid eingesetzt. Als Beschichtungsmaterialien dienen bei beiden Varianten üblicherweise Metalloxide und Metalle.

Als Beispiele für einfach beschichtete Pigmentplättchen seien mit Titandioxid, Eisen(III)oxid oder niederen Titanoxiden und/oder Titanoxynitriden beschichtete Glimmer und Aluminiumplättchen genannt. Goniochromatische Glanzpigmente, die besonders ausgeprägte winkelabhängige Farbwechsel zeigen, können durch Belegen der Substratplättchen (z. B. Aluminium-, Eisenoxid- oder bereits titandioxidbeschichtete Glimmerplättchen) mit abwechselnden Schichten niedrigbrechender Materialien wie Siliciumdioxid und Magnesiumfluorid und hochbrechenden Materialien wie Eisen(III)oxid, Titanoxid und den weiteren bereits genannten Titanverbindungen erhalten werden.

Derartige mehrphasige Glanzpigmente sind bekannt und im Handel z. B. unter den Namen Paliocrom® und Variocrom® (BASF), Iriodin®, Xirallic® und Colorstream® (Merck) sowie Chromaflair® (Flex Products) erhältlich.

Der Rest R¹ ist bevorzugt ein geradkettiger oder verzweigter aliphatischer Rest mit 2 bis 40 Kohlenstoffatomen, besonders bevorzugt mit 2 bis 18 Kohlenstoffatomen. Vorzugsweise enthält er 2 Hydroxylgruppen.

Hydroxyfunktionelle Polysiloxane, die nicht an Silicium-Atome gebundene Hydroxylgruppen enthalten, sind beispielsweise in dem europäischen Patent EP 0 217 364 B1 beschrieben. Geeignete funktionelle Polysiloxane sind im übrigen handelsüblich oder können nach bekannten Verfahren hergestellt werden, wie sie beschrieben sind in DE-C-1 236 505, US-A-3 960 574, US-A-4 076 695, US-A-3 481 969, US-A-3 442 925, US-A-3 567 499 und US-A-2 947 771.

Besonders bevorzugte Verbindungen, die den Rest R¹ enthalten, sind 1,2-Propandiol und α,ω-hydroxyalkylfunktionelles Dimethylpolysiloxan mit einem Molekulargewicht von 1800 g/mol.

Der Rest R² ist bevorzugt ein aliphatischer Rest mit 2 bis 40 Kohlenstoffatomen, besonders bevorzugt mit 2 bis 18 Kohlenstoffatomen. Ganz besonders bevorzugt wird der Rest der Adipinsäure.

Weitere vorteilhafte Ausgestaltungen der vorliegenden Erfindung ergeben sich aus den Unteransprüchen.

Die Erfindung betrifft auch ein Verfahren zur Herstellung eines Dispergiermittels, das dadurch gekennzeichnet ist, dass ein oder mehrere cyclische Lactone mit einem Alkohol der allgemeinen Formel R¹(OH₎ₘ, in der R¹ ein organischer Rest und m = 1 bis 3 ist, oder mit einem Polysiloxan, das 1 bis 3 nicht an ein Silicium-Atom gebundene Hydroxylgruppen aufweist, unter Ringöffnung umgesetzt werden und der als Zwischenprodukt erhaltene Polyester mit einer Dicarbonsäure oder einem Dicarbonsäureanhydrid unter Bildung eines Halbesters der Dicarbonsäure umgesetzt wird.

Geeignete zyklische Lactone, die bei der vorliegenden Erfindung verwendet werden können, schließen β-Propiolacton, δ-Valerolacton, ε-Caprolacton und Lactone ein, die den folgenden Säuren entsprechen: 2-Methyl-3-hydroxypropionsäure, 3-Hydroxynonansäure, 2-Dodecyl-3-hydroxypropionsäure, 2-Cyclopentyl-3-hydroxypropionsäure, 3-Phenyl-3-hydroxypropionsäure, 2-(1-Naphtyl)-3-hydroxypropionsäure, 2-Butyl-3-cyclohexyl-3-hydroxypropionsäure, 3-Hydroxypentadecansäure, 2-(2-Methylcyclopentyl)-3-hydroxypropionsäure, 2-o-Tolyl-3-hydroxypropionsäure, 3-Benzyl-3-hydroxypropionsäure, 2,2-Dimethyl-3-hydroxypropionsäure, 2-Methyl-5-hydroxyvaleriansäure, 3-Cyclohexyl-5-hydroxyvaleriansäure, 4-Phenyl-5-hydroxyvalariariansäure, 2-Heptyl-4-cyclopentyl-5-hydroxyvaleriansäure, 2-Methyl-3-phenyl-5-hydroxyvaleriansäure, 3-(2-Cyclohexylethyl)-5-hydroxyvaleriansäure, 2-(2-Phenylethyl)-4-propyl-5-hydroxyvaleriansäure, 4-Benzyl-5-hydroxyvaleriansäure, 3-Ethyl-5-isopropyl-6-hydroxycapronsäure, 2-Cyclopentyl-4-hexyl-6-hydroxycapronsäure, 3-Phenyl-6-hydroxycapronsäure, 3-(3,5-Diethylcyclohexyl)-5-ethyl-6-hydroxycapronsäure, 4-(3-Phenylpropyl)-6-hydroxycapronsäure, 2-Benzyl-5-isobutyl-6-hydroxycapronsäure, 2,2,4-Trimethyl-3-hydroxy-3-pentensäure, 2-Phenyl-6-hydroxy-6-octensäure, und 2,2-Dipropenyl-5-hydroxy-5-heptensäure. Mischungen der Lactone können eingesetzt werden.

Das bevorzugte Lacton ist ε-Caprolacton.

Die Erfindung betrifft auch ein Masterbatch, d. h. eine Grundmischung, zur Einarbeitung in thermoplastische Kunststoffe, enthaltend Pigmente, Füllstoffe und/oder andere feinteilige Feststoffe, thermoplastischen Kunststoff und einen Polyester der allgemeinen Formel 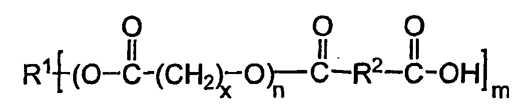 in der
R¹ den organischen Rest eines Alkohols mit 1 bis 3 OH-Gruppen oder den Rest eines Polysiloxans darstellt, das 1 bis 3 nicht an ein Silicium-Atom gebundene Hydroxylgruppen aufweist, R² einen zweiwertigen, geradkettigen oder verzweigten aliphatischen oder cycloaliphatischen Rest darstellt, x= 2 bis 18, n= 10 bis 500 und m= 1 bis 3 ist, wobei der Polyester ein Molekulargewicht von 1000 bis 20000 g/mol und eine Säurezahl von 3 bis 180 mgKOH/g aufweist und bei Raumtemperatur fest ist und in einem Anteil von 1 bis 25 Gew.-% bezogen auf das Gesamtgewicht des Masterbatch in diesem enthalten ist.

Bevorzugt ist das Dispergiermittel in einem Anteil von 5 bis 20 Gew.% bezogen auf das Gesamtgewicht des Masterbatch in diesem enthalten.

Neben dem erfindungsgemäßen Dispergiermittel können die Farbmasterbatches auch weitere in diesem technischen Gebiet übliche Zusatzstoffe wie z. B. weitere Dispergiermittel, andere Thermoplaste, Weichmacher, Wachse, Stabilisatoren, Lichtschutzmittel, Antistatika, Flammschutzmittel, Verstärkungsstoffe, Verarbeitungshilfsmittel, Gleit- und Trennmittel, Schlagzähmacher, Antioxidantien, Treibmittel oder optische Aufheller in den üblichen Mengen enthalten. Die erfindungsgemäßen Verbindungen können in reiner Form oder als Formulierung mit anderen bei den einzufärbenden Thermoplasten üblichen Komponenten und/oder den vorgenannten Zusatzstoffen zum Einsatz kommen.

Im folgenden wird die Erfindung anhand von Ausführungsbeispielen näher erläutert.

### Beispiele

Die Erfindung wird durch nachfolgende Beispiele zusätzlich erläutert. Bei molekular uneinheitlichen Substanzen stellen die angegebenen Molekulargewichte Durchschnittswerte des Zahlenmittels dar. Die Molekulargewichte bzw. mittleren Molekulargewichte Mn können nach üblichen Verfahren bestimmt werden, z. B. durch Ermittlung der OH-Zahl, der Säure-Zahl, kryoskopisch oder per Gelpermeationschromatographie. Sofern nicht anders ausgeführt, handelt es sich bei Teilen um Gewichtsteile und bei Prozenten um Gewichtsprozente.

### Herstellungsbeispiele

### Zwischenprodukt A1

### Polyester aus n-Decanol und epsilon-Caprolacton (Molverhältnis 1: 25)

Unter Schutzatmosphäre werden 200 Teile n-Decanol und 3593 Teile epsilon-Caprolacton homogenisiert, mit 0,3 Teilen Dibutylzinndilaurat (DBTL) versetzt und auf 180° C erhitzt. Man rührt etwa 6 Stunden bei dieser Temperatur, bis ein FK (Festkörpergehalt) von 98 % erreicht ist. Das Produkt mit einer Molmasse von ca. 3000 ist bei RT (Raumtemperatur) von wachsartiger Struktur und hat eine OH-Zahl von 23.

### Zwischenprodukt A2

### Polyester aus Glycerin und epsilon-Caprolacton (Molverhältnis 1: 26)

Unter Schutzatmosphäre werden 27 Teile Glycerin und 872 Teile epsilon-Caprolacton homogenisiert, mit 0,05 Teilen DBTL versetzt und auf 180° C erhitzt. Man rührt etwa 5 Stunden bei dieser Temperatur, bis ein FK von 99 % erreicht ist. Das Produkt mit einer Molmasse von ca. 3000 ist bei RT fest und hat eine OH-Zahl von 57.

### Zwischenprodukt A3

### Polyester aus Sorbitanmonostearat und epsilon-Caprolacton (Molverhältnis 1: 23)

Unter Schutzatmosphäre werden 130 Teile Sorbitanmonostearat und 776 Teile epsilon-Caprolacton homogenisiert, mit 0,05 Teilen DBTL versetzt und auf 180° C erhitzt. Man rührt etwa 7 Stunden dieser bei Temperatur, bis ein FK von 97 % erreicht ist. Das Produkt mit einer Molmasse von ca. 3000 ist bei RT wachsartig und hat eine OH-Zahl von 37.

### Zwischenprodukt A4

### Polyester aus Polyethylenglykol mit einer durchschnittlichen Molmasse von 200 und epsilon-Caprolacton (Molverhältnis 1: 25)

Unter Schutzatmosphäre werden 60 Teile des Polyethylenglykols und 841 Teile epsilon-Caprolacton homogenisiert, mit 0,05 Teilen DBTL versetzt und auf 180° C erhitzt. Man rührt etwa 8 Stunden bei dieser Temperatur, bis ein FK von 97 % erreicht ist. Das Produkt mit einer Molmasse von ca. 3000 ist bei RT fest und hat eine OH-Zahl von 44.

### Zwischenprodukt A5

### Polyester aus 1,4-Butandiol und epsilon-Caprolacton (Molverhältnis 1: 26)

Unter Schutzatmosphäre werden 27 Teile 1,4-Butandiol und 872 Teile epsilon-Caprolacton homogenisiert, mit 0,05 Teilen Dibutylzinndilaurat (DBTL) versetzt und auf 180° C erhitzt. Man rührt etwa 6 Stunden bei dieser Temperatur, bis ein FK von 97 % erreicht ist. Das Produkt mit einer Molmasse von ca. 3000 ist bei RT fest und hat eine OH-Zahl von 45.

### Zwischenprodukt A6

### Polyester aus Methoxypolyethylenglykol mit einer mittleren Molmasse von 500 und epsilon-Caprolacton (Molverhältnis 1: 3)

Unter Schutzatmosphäre werden 58 Teile des Methoxypolyethylenglykols und 42 Teile epsilon-Caprolacton homogenisiert, mit 0,3 Teilen p-Toluolsulfonsäure versetzt und auf 80° C erhitzt. Man rührt etwa 2 Stunden bei dieser Temperatur, bis ein FK von 99 % erreicht ist. Das Produkt mit einer Molmasse von ca. 900 ist bei RT flüssig und hat eine OH-Zahl von 63.

### Zwischenprodukt A7

### Polyester aus Stearylalkohol und epsilon-Caprolacton (Molverhältnis 1: 24)

Unter Schutzatmosphäre werden 90 Teile Stearylalkohol und 908 Teile epsilon-Caprolacton homogenisiert, mit 0,08 Teilen Dibutylzinndilaurat (DBTL) versetzt und auf 180° C erhitzt. Man rührt etwa 5 Stunden bei dieser Temperatur, bis ein FK von 99 % erreicht ist. Das Produkt mit einer Molmasse von ca. 3000 ist bei RT wachsartig und hat eine OH-Zahl von 19.

### Zwischenprodukt A8

### Polyester aus 1,2-Propandiol und epsilon-Caprolacton (Molverhältnis 1: 29)

Unter Schutzatmosphäre werden 7,6 Teile 1,2-Propandiol und 332 Teile epsilon-Caprolacton homogenisiert, mit 0,05 Teilen Dibutylzinndilaurat (DBTL) versetzt und auf 180° C erhitzt. Man rührt etwa 6 Stunden bei dieser Temperatur, bis ein FK von 98 % erreicht ist. Das Produkt mit einer Molmasse von ca. 3400 ist bei RT fest und hat eine OH-Zahl von 34.

### Zwischenprodukt A9

### Polyester aus 1,2-Propandiol und epsilon-Caprolacton (Molverhältnis 1: 43)

Unter Schutzatmosphäre werden 7,6 Teile 1,2-Propandiol und 492 Teile epsilon-Caprolacton homogenisiert, mit 0,08 Teilen Dibutylzinndilaurat (DBTL) versetzt und auf 180° C erhitzt. Man rührt etwa 7 Stunden bei dieser Temperatur, bis ein FK von 98 % erreicht ist. Das Produkt mit einer Molmasse von ca. 5000 ist bei RT fest und hat eine OH-Zahl von 22.

### Beispiel 1

### Halbester aus einer zweiwertigen C36-Dimersäure (Pripol 1022 von Unichema) und Zwischenprodukt A6

Unter Schutzatmosphäre werden 180 Teile Pripol 1022 und 273 Teile Zwischenprodukt A6 homogenisiert, mit 4,5 Teilen Alkylbenzolsulfonsäure versetzt und auf 180°C erhitzt. Nach etwa 4 Stunden waren 6 Teile Wasser abgespalten und eine SZ (Säurezahl) von 41,1 erreicht. Das Produkt ist bei RT ein wachsartiger Feststoff.

### Beispiel 2

### Halbester aus Pripol 1022 und Zwischenprodukt A7

Unter Schutzatmosphäre werden 38 Teile Pripol 1022 und 197 Teile Zwischenprodukt A7 homogenisiert, mit 2,4 Teilen p-Toluolsulfonsäure versetzt und auf 160°C erhitzt. Nach etwa 2,5 Stunden waren 1,2 Teile Wasser abgespalten und eine SZ von 18,3 erreicht. Das Produkt ist bei RT ein wachsartiger Feststoff.

### Beispiel 3

### Halbester aus Pripol 1022 und Zwischenprodukt A1

Unter Schutzatmosphäre werden 600 Teile Pripol 1022 und 3103 Teile Zwischenprodukt A1 homogenisiert, mit 37 Teilen Alkylbenzolsulfonsäure versetzt und auf 170°C erhitzt. Nach Abspaltung von 18,6 Teilen Wasser wurde ein bei RT wachsartiger Feststoff mit einer SZ von 20 erhalten; weitere Daten : Dichte 1,021 g/ml; FK 99%; Viskosität bei 80°C: 700 mPas.

### Beispiel 4

### Halbester aus Adipinsäure und Zwischenprodukt A1

Unter Schutzatmosphäre werden 9,3 Teile Adipinsäure und 191 Teile Zwischenprodukt A1 homogenisiert, mit 2 Teilen Dodecylbenzolsulfonsäure versetzt und bis auf 180°C erhitzt. Nach etwa 4 Stunden Wasserabspaltung war eine SZ von 18 erreicht. Das bräunliche Produkt ist bei RT ein wachsartiger Feststoff.

### Beispiel 5

### Halbester aus Adipinsäure und Zwischenprodukt A2

Unter Schutzatmosphäre werden 27,9 Teile Adipinsäure und 191 Teile Zwischenprodukt A2 homogenisiert, mit 2,2 Teilen Dodecylbenzolsulfonsäure versetzt und bis auf 180°C erhitzt. Nach etwa 5 Stunden Wasserabspaltung war eine SZ von 52 erreicht. Das leicht bräunliche Produkt ist bei RT ein wachsartiger Feststoff.

### Beispiel 6

### Halbester aus Adipinsäure und Zwischenprodukt A3

Unter Schutzatmosphäre werden 18,6 Teile Adipinsäure und 191 Teile Zwischenprodukt A3 homogenisiert, mit 2,1 Teilen Dodecylbenzolsulfonsäure versetzt und auf 180°C erhitzt. Nach etwa 16 Stunden Wasserabspaltung war eine SZ von 23 erreicht. Das bräunliche Produkt ist bei RT ein wachsartiger Feststoff.

### Beispiel 7

### Halbester aus Adipinsäure und Zwischenprodukt A4

Unter Schutzatmosphäre werden 18,6 Teile Adipinsäure und 191 Teile Zwischenprodukt A4 homogenisiert, mit 2,1 Teilen Dodecylbenzolsulfonsäure versetzt und auf 180°C erhitzt. Nach etwa 4 Stunden Wasserabspaltung war eine SZ von 32 erreicht. Das leicht bräunliche Produkt ist bei RT ein wachsartiger Feststoff.

### Beispiel 8

### Halbester aus Adipinsäure und Zwischenprodukt A5

Unter Schutzatmosphäre werden 18,6 Teile Adipinsäure und 191 Teile Zwischenprodukt A5 homogenisiert, mit 2,1 Teilen Dodecylbenzolsulfonsäure versetzt und auf 170°C erhitzt. Nach etwa 4 Stunden Wasserabspaltung war eine SZ von 33 erreicht. Das leicht bräunliche Produkt ist bei RT ein wachsartiger Feststoff.

### Beispiel 9

### Halbester aus Adipinsäure und Zwischenprodukt A8

Unter Schutzatmosphäre werden 14,6 Teile Adipinsäure und 170 Teile Zwischenprodukt A8 homogenisiert, mit 2,3 Teilen Dodecylbenzolsulfonsäure versetzt und auf 170°C erhitzt. Nach etwa 4 Stunden Wasserabspaltung war eine SZ von 30 erreicht. Das leicht bräunliche Produkt ist bei RT ein wachsartiger Feststoff.

### Beispiel 10

### Halbester aus Adipinsäure und Zwischenprodukt A9

Unter Schutzatmosphäre werden 14,6 Teile Adipinsäure und 250 Teile Zwischenprodukt A9 homogenisiert, mit. 2,5 Teilen Dodecylbenzolsulfonsäure versetzt und auf 175°C erhitzt. Nach etwa 6 Stunden Wasserabspaltung war eine SZ von 20 erreicht. Das leicht bräunliche Produkt ist bei RT ein wachsartiger Feststoff.

### Zwischenprodukt S1: Herstellung eines silikonhaltigen epsilon-Caprolacton-Polyesters

35 g eines alpha,omega-hydroxyalkylfunktionellen Dimethylpolysiloxans mit einem Gesamtmolekulargewicht von ca. 1800 g/mol werden mit 150,4 g epsilon-Caprolacton zur Reaktion gebracht. Hierzu lässt man das Gemisch unter Zusatz von 0.035 g DBTL bei 160°C in eine N₂-Atmosphäre ca. 8 Stunden reagieren. Während dieser Zeit kann man das Fortschreiten der Reaktion durch die Bestimmung der nichtflüchtigen Anteile verfolgen. Die Reaktion ist beendet, wenn der Gehalt an nichtflüchtigen Anteilen größer als 98 % ist. Das Endprodukt ist ein gelber, wachsartiger Feststoff. Das alpha,omega- hydroxyalkylfunktionelle Dimethylpolysiloxan als Startalkohol gewinnt man in dem Fachmann bekannter Weise, durch Addition von geeigneten ungesättigten Alkoholen (wie z. B. der, in diesem Beispiel verwendete Allylalkohol) an Dimethylpolysiloxane, die endständigen Silaneinheiten tragen.

**Zwischenprodukt S2 - S7:** Analog zu Zwischenprodukt S1 wurden folgende weitere silikonhaltige Polyester hergestellt:

| **Zwischenprodukt Nr.** | **Eingesetztes Hydroxyalkylfunktionelles Dimethylpolysiloxan** | **Einsatzmenge cyclischer Ester** |
|---|---|---|
| S2 | 35g alpha,omega-hydroxyalkylfunktionelles Dimethylpolysiloxan mit einem Mn von 1800 g/mol | 300,8g epsilon-Caprolacton |
| S3 | 35g alpha,omega-hydroxyalkylfunktionelles Dimethylpolysiloxan mit einem Mn von 1800 g/mol | 75,2g epsilon-Caprolacton |
| S4 | 35g alpha,omega-hydroxyalkylfunktionelles Dimethylpolysiloxan mit einem Mn von 900 g/mol | 75,2g epsilon-Caprolacton |
| S5 | 35g alpha,omega-hydroxyalkylfunktionelles Dimethylpolysiloxan mit einem Mn von 900 g/mol | 120,4g epsilon-Caprolacton + 30 g delta-Valerolacton |
| S6 | 35g hydroxyalkylfunktionelles Dimethylpolysiloxan A ^{*1} | 300,8g epsilon-Caprolacton |
| S7 | 35g Silaplane FM-0425 ^{*2} | 150,4g epsilon-Caprolacton |

| | | |
|---|---|---|
| ^{*1} bei dem hydroxyalkylfunktionellen Dimethylpolysiloxan A handelt es sich im um ein Polydimethylsiloxan, dass über die Polydimethylsiloxankette verteilt im Mittel 3 Hydroxyfunktionen trägt und ein Molekulargewicht von ca. 2000 g/Mol hat. Die Hydroxyfunktionen wurden durch die Addition von Allylalkohol an die entsprechende Silan-haltige Vorstufe generiert. ^{*2} Silaplane FM-0425 ist ein Handelsprodukt der Fa. Chisso Corporation, Japan. Es handelt es sich um ein monohydroxyalkylterminiertes Polydimethylsiloxan mit einem Molekulargewicht von ca. 10 000 g/Mol. | | |

Bei den hergestellten Zwischenprodukten S2 - S7 handelt es sich um wachsartige weiße bis gelbe Feststoffe.

### Beispiel 11: Herstellung eines carbonsauren silikonhaltigen epsilon-Caprolacton-Polyesters

Umsetzung der Hydroxygruppen des Zwischenprodukts S1 mit Adipinsäure 130g des Zwischenprodukts S1 werden mit 7,1g Adipinsäure umgesetzt. Hierzu werden beide Komponenten unter N₂-Atmosphäre nach Zusatz von 0,25 g Paratoluolsulfonsäure 4 - 5 h unter Rühren auf 160°C erhitzt. Der Fortgang der Reaktion kann über die Abnahme der Säurezahl verfolgt werden. Die Reaktion ist dann beendet, wenn die Säurezahl die Hälfte der theoretischen Säurezahl der Ausgangsmischung erreicht hat. In diesem beschriebenen Fall wurde die Reaktion bei einer Säurezahl von 19,9 beendet (theoretischer Ausgangswert 39,8).

Analog zu Beispiel 11 wurden folgende weitere Beispiele hergestellt:

| **Beispiel Nr.** | **Eingesetztes Zwischenprodukt** | **Eingesetzte difunktionelle Carbonsäure** |
|---|---|---|
| 12 | 100g Zwischenprodukt S1 | 11,9g Dimerisierte Tallölfettsäure (SZ:198) |
| 13 | 100g Zwischenprodukt S1 | 2,5g Bernsteinsäure |
| 14 | 100g Zwischenprodukt S1 | 3,6g 1,4-Cyclohexanedi-carbonsäure |
| 15 | 100g Zwischenprodukt S2 | 1,7g Adipinsäure |
| 16 | 100g Zwischenprodukt S3 | 5,2g Adipinsäure |
| 17 | 100g Zwischenprodukt S4 | 10,3g Adipinsäure |
| 18 | 100g Zwischenprodukt S5 | 6,1g Adipinsäure |
| 19 | 100g Zwischenprodukt S6 | 2,3g Adipinsäure |
| 20 | 500g Zwischenprodukt S8 | 1,4g Adipinsäure |

Bei diesen Produkten handelt es sich um gelbe bis bräunliche wachsartige Feststoffe.

### Verwendungsbeispiele

Auf einem Berstorff ZE 25/40 D Zweischneckenextruder wurden Farbmasterbatches aus Pigment, Thermoplast und Dispergiermittel hergestellt. Zur Bestimmung der Farbstärke wurde ein Weißcompound aus 5,5Teilen Weißpigment (silanbehandeltes TiO2 /z.B. Kronos 2220) in 94,5 Teilen HDPE (z. B. Eraclene MP90 von Polimeri Europa; Dichte: 0,96 g/ml, MFI: 7g/10 min, nach ASTM D1238) hergestellt und durch Mischen mit 2,5% des jeweiligen zu prüfenden Farbmasterbatches auf einem Polymix 110L Zweiwalzwerk eingefärbt. Anschließend wurden aus jeweils 22g dieser eingefärbten Mischung Prüfplatten zur Farbstärkemessung durch 30sekündiges Pressen auf einer Polystat 200T Presse hergestellt.

Die Farbstärkedifferenz zur jeweiligen 0-Probe ohne Dispergiermittel wurde mit einem Byk Gardner Color-Guide Sphere d/8 spin bestimmt.

Es wurden Pigmentfarbmasterbatches hergestellt aus Pigment, Dispergiermittel nach Art und Menge wie in den folgenden Tabellen angegeben, der Rest bestand aus Thermoplast.

Dabei zeigten sich neben der verbesserten Farbstärke bei den mit den erfindungsgemäßen Produkten hergestellten Prüfplatten deutlich weniger Pigmentagglomerate (Stippen) als bei den 0-Proben und den Vergleichsbeispielen.

| **Masterbatch aus 20% Irgalith gelb WSR ,CIBA -(Cl P.Y. 62) in HDPE (Eraclene MP90)** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| 1 | 6 | 110 |
| 1 | 10 | 111 |
| 3 | 6 | 111 |
| 3 | 10 | 114 |
| 4 | 6 | 109 |
| 4 | 10 | 110 |
| 5 | 6 | 115 |
| 5 | 10 | 140 |
| 6 | 6 | 113 |
| 6 | 10 | 124 |
| 7 | 6 | 124 |
| 7 | 10 | 128 |
| 8 | 6 | 115 |
| 8 | 10 | 130 |
| 9 | 6 | 121 |
| 9 | 10 | 140 |
| 11 | 6 | 127 |
| 11 | 10 | 145 |
| Zwischenprodukt A2* | 6 | 101 |
| Zwischenprodukt A3* | 6 | 102 |
| Zwischenprodukt A4* | 6 | 102 |
| Zwischenprodukt A5* | 6 | 101 |

| | | |
|---|---|---|
| *: nicht erfindungsgemäßes Vergleichsbeispiel: | | |

(Die Zwischenprodukte A2 bis A5 wurden ohne Umsetzung mit einer Dicarbonsäure als Dispergiermittel eingesetzt)

| **Masterbatch aus 20% Hostaperm Rosa E, Clariant -(CI P.V. 19) in HDPE (Eraclene MP90)** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| 3 | 6 | 135 |
| 3 | 10 | 145 |
| 4 | 6 | 114 |
| 4 | 10 | 135 |
| 5 | 6 | 118 |
| 5 | 10 | 167 |
| 6 | 6 | 127 |
| 6 | 10 | 162 |
| 7 | 6 | 139 |
| 7 | 10 | 160 |
| 8 | 6 | 132 |
| 8 | 10 | 168 |
| 9 | 6 | 123 |
| 9 | 10 | 146 |
| 11 | 6 | 128 |
| 11 | 10 | 148 |

| **Masterbatch aus 20% Heliogenblau, BASF -(CI P.B. 15:3) in LDPE, MFI 20g/ 10min.** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| A* | 6 | 103 |
| B* | 6 | 105 |
| 8 | 6 | 120 |
| 9 | 6 | 121 |
| 11 | 6 | 123 |

| | | |
|---|---|---|
| *: nicht erfindungsgemäßes Vergleichsbeispiel | | |

### Vergleichsbeispiel A (nicht erfindungemäß):

Es handelt sich dabei um eine Schmelzemischung gemäß Beispiel 2 der DE 195 16 387 aus folgenden Komponenten: 47,5 Gew.-% eines weitgehend amorphen Poly-alpha-Olefins (wie im Vergleichsbeispiel B der DE 195 16 387), 47,5 Gew.-% eines Polyolefinwachses (wie im Vergleichsbeispiel C der DE 195 16 387) und 5 Gew.-% des Polyacrylsäureesters gemäss Vergleichsbeispiel D der DE 195 16 387.

### Vergleichsbeispiel B (nicht erfindungsgemäß):

Es wurde Licowax PE 520, ein nicht funktionalisiertes Niederdruck-Polyethylenwachs der Firma Clariant verwendet.

### Vergleichsbeispiel C (nicht erfindungsgemäß):

Es wurde Licowax PP 230, ein nicht funktionalisiertes Polypropylenwachs der Firma Clariant verwendet.

| **Masterbatch aus 40% Heliogenblau, BASF -(CI P.B. 15:3) in LDPE, MFI 20g/ 10min.** | | | |
|---|---|---|---|
| **Dispergiermittel nach Beispiel** | **Eingesetzte Teile Dispergiermittel** | **% Farbstärke** | **Druckfilterwert nach DIN EN 13900-5 [bar/g]** |
| 0-Probe ohne Dispergiermittel* | 0 | 100 | 2,5 |
| 8 | 20 | 122 | 1,0 |
| 9 | 20 | 126 | 0,8 |
| 11 | 20 | 125 | 1,2 |
| Mischung aus: | | 129 | 0,9 |
| 9 und | 10 | | |
| Melt 1000 (Metallocenkatalysiertes LLDPE, Fa. Dow Chemicals) | 10 | | |

| **Masterbatch aus 20% Heliogenblau, BASF -(CI P.B. 15:3) in Polypropylen Homopolymer, MFI 25g/ 10min.** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| A* | 10 | 109 |
| B* | 10 | 114 |
| C* | 10 | 117 |
| 8 | 10 | 149 |
| 9 | 10 | 165 |
| 11 | 10 | 150 |

| | | |
|---|---|---|
| *: nicht erfindungsgemäßes Vergleichsbeispiel | | |

| **Masterbatch aus 40% Heliogenblau, BASF -(Cl P.B. 15:3) in Polypropylen Homopolymer, MFI 25g/ 10min.** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| C* | 20 | 115 |
| 8 | 20 | 153 |
| 9 | 20 | 166 |
| 11 | 20 | 155 |
| Mischung aus: | | 130 |
| 9 und | 10 | |
| C | 10 | |

| | | |
|---|---|---|
| *: nicht erfindungsgemäßes Vergleichsbeispiel | | |

| **Masterbatch aus 20% Irgalith Rot LCB , Ciba -(CI P.R. 53:1) in LDPE, MFI 20g/ 10min.** | | |
|---|---|---|
| **Dispergiermittel nach Beispiel** | **Eingesetzte Teile Dispergiermittel** | **% Farbstärke** |
| 0-Probe ohne Dispergiermittel* | 0 | 100 |
| A* | 10 | 98 |
| B* | 10 | 108 |
| 8 | 10 | 125 |
| 9 | 10 | 124 |
| 11 | 10 | 126 |

| | | |
|---|---|---|
| *: nicht erfindungsgemäßes Vergleichsbeispiel | | |

## Patentansprüche

1. Dispergiermittel für Pigmentkonzentrate für die Einfärbung von thermoplastischen Kunststoffen, welches
- die allgemeine Formel 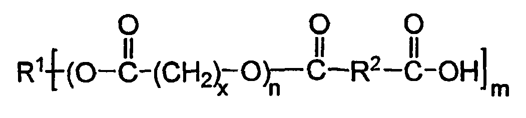 aufweist, in der
R¹ den organischen Rest einer Verbindung mit 1 bis 3 Hydroxylgruppen pro Molekül oder den Rest eines Polysiloxans darstellt, das 1 bis 3 nicht an ein Silicium-Atom gebundene Hydroxylgruppen aufweist,
R² einen zweiwertigen, geradkettigen oder verzweigten aliphatischen oder cycloaliphatischen Rest darstellt,
x= 2 bis 18, n= 10 bis 500 und m= 1 bis 3 ist,
- ein Molekulargewicht von 1000 bis 20000 g/mol und eine Säurezahl von 3 bis 180 mgKOH/g aufweist und
- bei Raumtemperatur fest ist.

2. Dispergiermittel nach Anspruch 1, **dadurch gekennzeichnet, dass** die Verbindung mit 1 bis 3 Hydroxylgruppen pro Molekül ein geradkettiger oder verzweigter aliphatischer oder cycloaliphatischer Alkohol mit einem Molekulargewicht von 30 bis 5000 g/mol ist, der Ether- und/oder Estergruppen innerhalb des Restes R¹ enthalten kann.

3. Dispergiermittel nach Anspruch 1, **dadurch gekennzeichnet, dass** R¹ der Rest eines mono- bis trihydroxyfunktionellen Dialkylpolysiloxans ist.

4. Verfahren zur Herstellung eines Dispergiermittels nach Anspruch 1 bis 3, **dadurch gekennzeichnet, dass** ein oder mehrere cyclische Lactone mit einem Alkohol der allgemeinen Formel R¹(OH)ₘ, in der R¹ ein organischer Rest und m = 1 bis 3 ist, oder mit einem Polysiloxan, das 1 bis 3 nicht an ein Silicium-Atom gebundene Hydroxylgruppen aufweist, unter Ringöffnung umgesetzt werden und der als Zwischenprodukt erhaltene Polyester mit einer Dicarbonsäure oder einem Dicarbonsäureanhydrid unter Bildung eines Halbesters der Dicarbonsäure umgesetzt wird.

5. Verwendung eines Polyesters der allgemeinen Formel 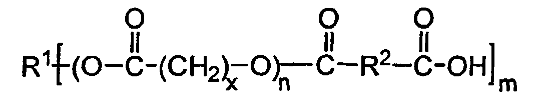 in der
R¹ den organischen Rest einer Verbindung mit 1 bis 3 Hydroxylgruppen pro Molekül oder den Rest eines Polysiloxans darstellt, das 1 bis 3 nicht an ein Silicium-Atom gebundene Hydroxylgruppen aufweist,
R² einen zweiwertigen, geradkettigen oder verzweigten aliphatischen oder cycloaliphatischen Rest darstellt,
x= 2 bis 18, n= 10 bis 500 und m= 1 bis 3 ist, wobei der Polyester
- ein Molekulargewicht von 1000 bis 20000 g/mol und eine Säurezahl von 3 bis 180 mgKOH/g aufweist und
- bei Raumtemperatur fest ist, als Dispergiermittel für Pigmente, Füllstoffe und/oder andere feinteilige Feststoffe, die in thermoplastische Kunststoffe eingearbeitet werden.

6. Masterbatch zur Einarbeitung in thermoplastische Kunststoffe, enthaltend Pigmente, Füllstoffe und/oder andere feinteilige Feststoffe, thermoplastischen Kunststoff und einen Polyester der allgemeinen Formel 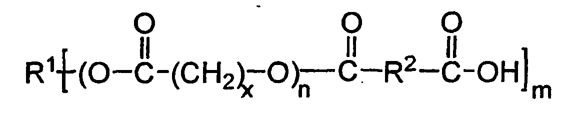 in der
R¹ den organischen Rest eines Alkohols mit 1 bis 3 OH-Gruppen oder den Rest eines Polysiloxans darstellt, das 1 bis 3 nicht an ein Silicium-Atom gebundene Hydroxylgruppen aufweist,
R² einen zweiwertigen, geradkettigen oder verzweigten aliphatischen oder cycloaliphatischen Rest darstellt,
x= 2 bis 18, n= 10 bis 500 und m= 1 bis 3 ist, wobei der Polyester
- ein Molekulargewicht von 1000 bis 20000 g/mol und eine Säurezahl von 3 bis 180 mgKOH/g aufweist und
- bei Raumtemperatur fest ist und in einem Anteil von 1 bis 25 Gew.-% bezogen auf das Gesamtgewicht des Masterbatch in diesem enthalten ist.

## Claims

1. Dispersing agent for pigment concentrates for the colouring of thermoplastics, which
- has the general formula 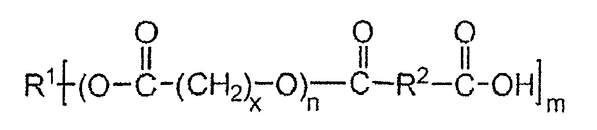 in which
R¹ is the organic radical of a compound having from 1 to 3 hydroxy groups per molecule, or the radical of a polysiloxane which has from 1 to 3 hydroxy groups not bonded to a silicon atom,
R² is a divalent, straight-chain or branched aliphatic or cycloaliphatic radical,
x is from 2 to 18, n is from 10 to 500 and m is from 1 to 3,
- has a molar mass of from 1000 to 20000 g/mol and an acid number of from 3 to 180 mgKOH/g and
- is solid at room temperature.

2. Dispersing agent according to Claim 1, **characterized in that** the compound having from 1 to 3 hydroxy groups per molecule is a straight-chain or branched aliphatic or cycloaliphatic alcohol with a molar mass of from 30 to 5000 g/mol which, within the radical R¹, can contain ether groups and/or ester groups.

3. Dispersing agent according to Claim 1, **characterized in that** R¹ is the radical of a mono- to trihydroxy-functional dialkylpolysiloxane.

4. Process for preparing a dispersing agent according to any of Claims 1 to 3, **characterized in that** one or more cyclic lactones are reacted, with ring-opening, with an alcohol of the general formula R¹(OH)ₘ, in which R¹ is an organic radical and m is from 1 to 3, or with a polysiloxane which has from 1 to 3 hydroxy groups not bonded to a silicon atom, and the polyester obtained as precursor is reacted with a dicarboxylic acid or with a dicarboxylic anhydride to form a half-ester of the dicarboxylic acid.

5. Use of a polyester of the general formula 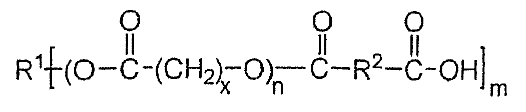 in which
R¹ is the organic radical of a compound having from 1 to 3 hydroxy groups per molecule, or the radical of a polysiloxane which has from 1 to 3 hydroxy groups not bonded to a silicon atom,
R² is a divalent, straight-chain or branched aliphatic or cycloaliphatic radical,
x is from 2 to 18, n is from 10 to 500 and m is from 1 to 3, where the polyester
- has a molar mass of from 1000 to 20000 g/mol and an acid number of from 3 to 180 mgKOH/g and
- is solid at room temperature, as dispersing agent for pigments, fillers and/or other fine-particle solids which are incorporated into thermoplastics.

6. Masterbatch for incorporation into thermoplastics, comprising pigments, fillers and/or other fine-particle solids, thermoplastic and a polyester of the general formula 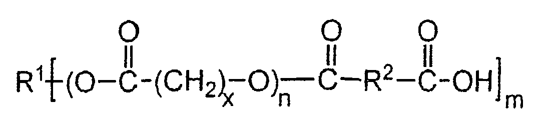 in which
R¹ is the organic radical of an alcohol having from 1 to 3 OH groups, or the radical of a polysiloxane which has from 1 to 3 hydroxy groups not bonded to a silicon atom,
R² is a divalent, straight-chain or branched aliphatic or cycloaliphatic radical,
x is from 2 to 18, n is from 10 to 500 and m is from 1 to 3, where the polyester
- has a molar mass of from 1000 to 20000 g/mol and an acid number of from 3 to 180 mgKOH/g and
- is solid at room temperature, and is present in a proportion of from 1 to 25% by weight, based on the total weight of the masterbatch.

## Revendications

1. Dispersant pour concentrés de pigments pour la coloration de matières thermoplastiques :
- qui présente la formule générale 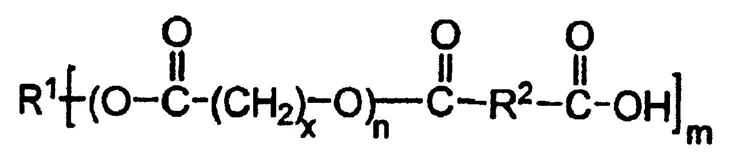 dans laquelle
R¹ représente le résidu organique d'un composé avec 1 à 3 groupements hydroxyles par molécule ou le résidu d'un polysiloxane qui présente 1 à 3 groupements hydroxyles qui ne sont pas liés à un atome de silicium,
R² représente un résidu bivalent, linéaire ou ramifié, aliphatique ou cycloaliphatique,
x = 2 à 18, n= 10 à 500 et m= 1 à 3,
- qui présente un poids moléculaire de 1000 à 20000 g/mol et un indice d'acidité de 3 à 180 mgKOH/g et
- qui est solide à température ambiante.

2. Dispersant selon la revendication 1, **caractérisé en ce que** le composé est un alcool linéaire ou ramifié, aliphatique ou cycloaliphatique, avec 1 à 3 groupements hydroxyles par molécule et avec un poids moléculaire de 30 à 5000 g/mol, qui peut contenir des groupements éther et/ou ester à l'intérieur du résidu R¹.

3. Dispersant selon la revendication 1, **caractérisé en ce que** R¹ est le résidu d'un dialkylpolysiloxane mono- à trihydroxyfonctionnel.

4. Procédé de fabrication d'un dispersant selon la revendication 1 à 3, **caractérisé en ce qu'**une ou plusieurs lactones cycliques sont transformées par ouverture de cycle avec un alcool de formule générale R¹(OH)ₘ, dans laquelle R¹ est un résidu organique et m = 1 à 3, ou avec un polysiloxane qui présente 1 à 3 groupements hydroxyles qui ne sont pas liés à un atome de silicium, et le polyester obtenu comme produit intermédiaire est transformé avec un acide dicarboxylique ou un anhydride d'acide dicarboxylique avec formation d'un hémiester de l'acide dicarboxylique.

5. Utilisation d'un polyester de formule générale 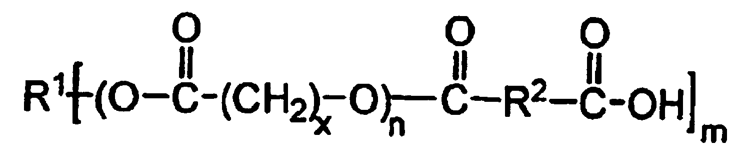 dans lequel
R¹ représente le résidu organique d'un composé avec 1 à 3 groupements hydroxyles par molécule ou le résidu d'un polysiloxane qui présente 1 à 3 groupements hydroxyles qui ne sont pas liés à un atome de silicium,
R² représente un résidu bivalent, linéaire ou ramifié, aliphatique ou cycloaliphatique,
x = 2 à 18, n = 10 à 500 et m = 1 à 3, dans laquelle le polyester :
- présente un poids moléculaire de 1000 à 20000 g/mol et un indice d'acidité de 3 à 180 mgKOH/g et
- est solide à température ambiante comme dispersant pour pigments, charges et/ou autres solides finement divisés qui sont incorporés dans des matières thermoplastiques.

6. Mélange maître pour l'incorporation dans des matières thermoplastiques, contenant des pigments, des charges et/ou d'autres solides finement divisés, une matière thermoplastique et un polyester de formule générale 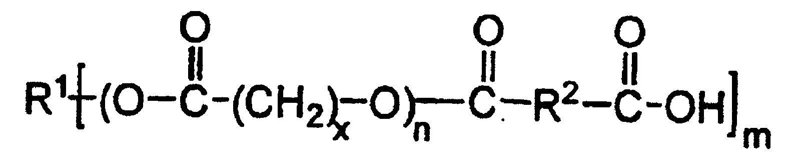 dans lequel
R¹ représente le résidu organique d'un alcool avec 1 à 3 groupements OH ou le résidu d'un polysiloxane qui présente 1 à 3 groupements hydroxyles qui ne sont pas liés à un atome de silicium,
R² représente un résidu bivalent, linéaire ou ramifié, aliphatique ou cycloaliphatique,
x = 2 à 18, n = 10 à 500 et m = 1 à 3, dans lequel le polyester
- présente un poids moléculaire de 1000 à 20000 g/mol et un indice d'acidité de 3 à 180 mgKOH/g et
- est solide à température ambiante et est contenu à hauteur de 1 à 25 % en poids rapportés au poids total du mélange maître dans ce dernier.
